# EUROPÄISCHE PATENTANMELDUNG

(11) **EP 1 634 853 A1**
(43) Veröffentlichungstag der Anmeldung: **15.03.2006**
(21) Anmeldenummer: 05012710.9
(22) Anmeldetag: 14.06.2005
(51) Int. Cl.: C01C 1/08, F01N 3/20

(54) **Vorrichtung und Verfahren zur Erzeugung von Ammoniak aus festen Harnstoff-Pellets**

(30) Priorität: 01.09.2004 DE 102004042225
(71) Anmelder: MAN Nutzfahrzeuge Aktiengesellschaft, 80995 München (DE)
(72) Erfinder: Jacob, Eberhardt, Dr., 82152 Krailing (DE); Stiermann, Erwin, 86356 Neusäss (DE)

(57) **Zusammenfassung**

Die Erfindung betrifft eine Vorrichtung und ein Verfahren zur Erzeugung von Ammoniak aus festen Harnstoff-Pellets, die in einem Vorratsbehälter (1) bevorratet werden. Die Vorrichtung sieht verschiedene Teilvorrichtungen vor, nämlich eine Pellets-Dosiervorrichtung (7), einen Pellets-Beschleuniger (8), einen Pellets-Schusskanal (9) und einen Ammoniak-Reaktor (11) mit einem Raum oder einer Zone (10) für ein Einschiessen von Harnstoff-Pellets und einer am Ende der Schussstrecke angeordneten Pellets-Prallwand (12) sowie einer Harnstoff-Verdampfungsvorrichtung (13) und einem Hydrolysekatalysator (14). Das erfindungsgemäße Verfahren kennzeichnet sich wie folgt. Die Harnstoff-Pellets werden mittels der Dosiervorrichtung (7) in geregelter Menge/Anzahl aus dem Vorratsbehälter (1) entnommen und zum Pellets-Beschleuniger (8) transportiert, mit diesem intern mechanisch auf eine hohe Geschwindigkeit beschleunigt, dann aus diesem in den Pellets-Schusskanal (9) und über diesen weiter geführt in den Ammoniak-Reaktor (11) eingeschossen, wo sie am Ende der Schussstrecke an der Pellets-Prallwand (12) aufschlagen und in eine Vielzahl von Bruchstücken zerkleinert werden. Diese Pellets-Bruchstücke werden unmittelbar anschließend mittels der Harnstoff-Verdampfungsvorrichtung (13) in ein Ammoniak (NH₃) und Isocyansäure (HNCO) enthaltendes Gasgemisch umgewandelt, das anschließend zusammen mit Wasserdampf durch den Hydrolysekatalysator (14) geleitet und dabei die Isocyansäure in Ammoniak und Kohlendioxid umgewandelt wird.

## Beschreibung

Die Erfindung betrifft gemäß Anspruch 1 eine Vorrichtung und gemäß Anspruch 17 ein Verfahren zur Erzeugung von Ammoniak aus festen Harnstoff-Pellets, die in einem Vorratsbehälter bevorratet sind.

Die Erfindung geht aus von der EP 1 338 562 A1. In dieser wird ein Verfahren und eine Vorrichtung zur Ammoniakerzeugung beschrieben. Dabei wird fester Harnstoff, der in Form von Prills oder Pellets oder Partikeln in einem Vorratsbehälter bevorratet ist, unter Zuhilfenahme eines Druckluftstromes einem Reaktor zur Ammoniakerzeugung zugeführt. In diesem wird der zugeführte feste Harnstoff durch Blitzthermolyse in ein Gasgemisch aus Ammoniak und Isocyansäure umgewandelt. Dieses Gasgemisch wird unmittelbar ausschließend in Gegenwart von Wasserdampf katalytisch nachbehandelt, bei welcher Hydrolyse die Isocyansäure ebenfalls in Ammoniak und Kohlendioxid umgewandelt wird. Die druckluftgestützte Dosierung der festen Harnstoffteilchen setzt eine permanent verfügbare Druckluftquelle voraus, die bei Bedarf durch einen Kompressor aufzufüllen ist. Dieses kann sich fallweise als zu aufwendig erweisen.

Es ist daher Aufgabe der Erfindung, eine Vorrichtung und ein Verfahren zur Erzeugung von Ammoniak aus festen Harnstoff-Pellets zu schaffen, die bzw. das ohne eine druckluftgestützte Dosierung der Harnstoff-Pellets auskommt.

Diese Aufgabe wird erfindungsgemäß durch eine Vorrichtung mit den im Anspruch 1 angegebenen Vorrichtungsmerkmalen und durch ein Verfahren mit den im Anspruch 17 angegebenen Verfahrensmerkmalen gelöst.

Vorteilhafte Details und Ausgestaltungen bzw. Weiterbildungen der Erfindung sind in den abhängigen Unteransprüchen gekennzeichnet.

Die erfindungsgemäße Vorrichtung weist eine Anzahl von aufeinander folgenden Teilvorrichtungen auf, die in ihrem Zusammenwirken dazu dienen, dass aus den bevorrateten festen Harnstoff-Pellets nach dem erfindungsgemäßen Verfahren Ammoniak erzeugbar ist.

Bei diesen Teilvorrichtungen handelt es sich um eine Pellets-Dosiervorrichtung, einen Pellets-Beschleuniger, einen Pellets-Schusskanal und einen Ammoniak-Reaktor mit einem Raum oder einer Zone für ein Einschießen von Harnstoff-Pellets und einer am Ende der Schussstrecke angeordneten Pellets-Prallwand und einer Harnstoff-Verdampfungsvorrichtung und einem Hydrolysekatalysator. Entsprechend dem erfindungsgemäßen Verfahren werden die Harnstoff-Pellets mittels der Dosiervorrichtung aus dem Vorratsbehälter in geregelter Menge bzw. Anzahl entnommen und zum Pellets-Beschleuniger transportiert, mittels diesem intern mechanisch auf eine hohe Geschwindigkeit von beispielsweise 100m/sec beschleunigt und ausgangs über den Pellets-Schusskanal in den Ammoniak-Reaktor eingeschossen, wo sie am Ende der Schussstrecke an der dortigen Pellets-Prallwand aufgrund der hohen Aufprallenergie in eine Vielzahl von Bruchstücken zerkleinert werden. Diese Pellets-Bruchstücke werden unmittelbar ausschließend mittels der Harnstoff-Verdampfungsvorrichtung durch thermische Hydrolyse, insbesondere Blitzthermolyse, in ein Gasgemisch aus Ammoniak (NH₃) und lsocyansäure (HNCO) umgewandelt. Die schädliche Isocyansäure (HNCO) wird dadurch eliminiert, dass dieses Gasgemisch sofort anschließend in Anwesenheit von Wasserdampf katalytisch nachbehandelt und hierzu durch einen Hydrolysekatalysator geleitet wird, in dem die Isocyansäure in Ammoniak und Kohlendioxid umgewandelt wird. Am Ende des Verfahrens wird das ausgangs des Hydrolysekatalysators gegebene, Ammoniak enthaltende Gasgemisch seiner bestimmungsgemäßen Verwendung entsprechend einer dem Ammoniak-Reaktor nachgeordneten Apparatur, Gerätschaft oder Einrichtung wie SCR-Katalysator(en) zugeführt. Das Einschießen der Harnstoff-Pellets in den Ammoniak-Reaktor hat den Vorteil, dass ein Verstopfen oder Verkleben des Schusskanals durch Harnstoff vermeidbar ist. Das Zertrümmern der eingeschossenen Harnstoff-Pellets an der Pellets-Prallwand hat den Vorteil, dass die kleinen Bruchstücke schnell und mit vergleichsweise geringem Heizenergieaufwand in gasförmigen Aggregatszustand überfahrbar sind.

Nachfolgend ist die erfindungsgemäße Vorrichtung anhand mehrerer in der Zeichnung dargestellter Beispiele noch näher erläutert, ebenso das erfindungsgemäße Verfahren auf der Basis dieser Ausführungsbeispiele. In der Zeichnung zeigen:

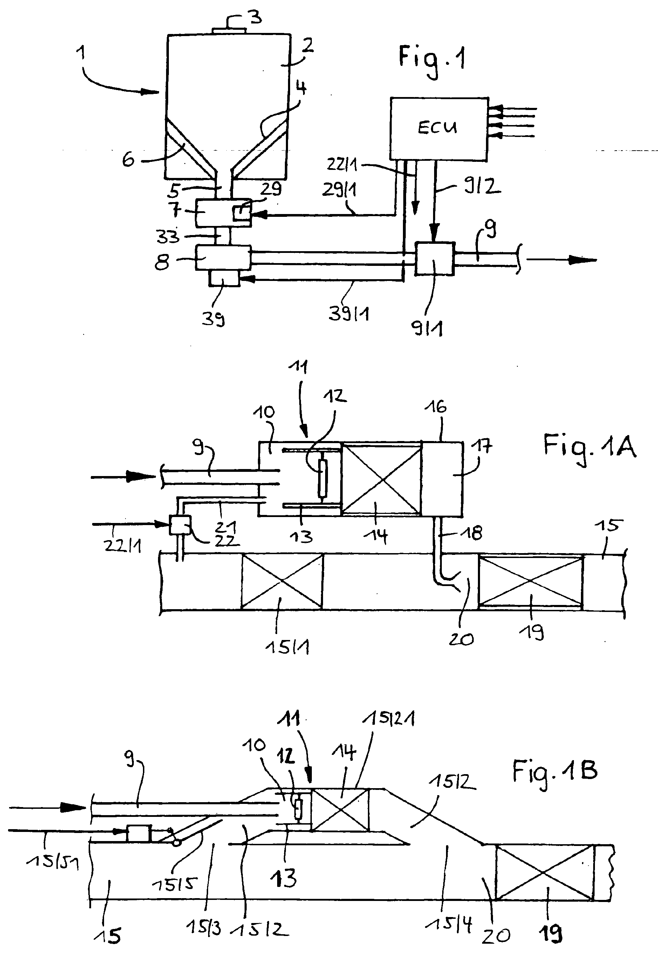

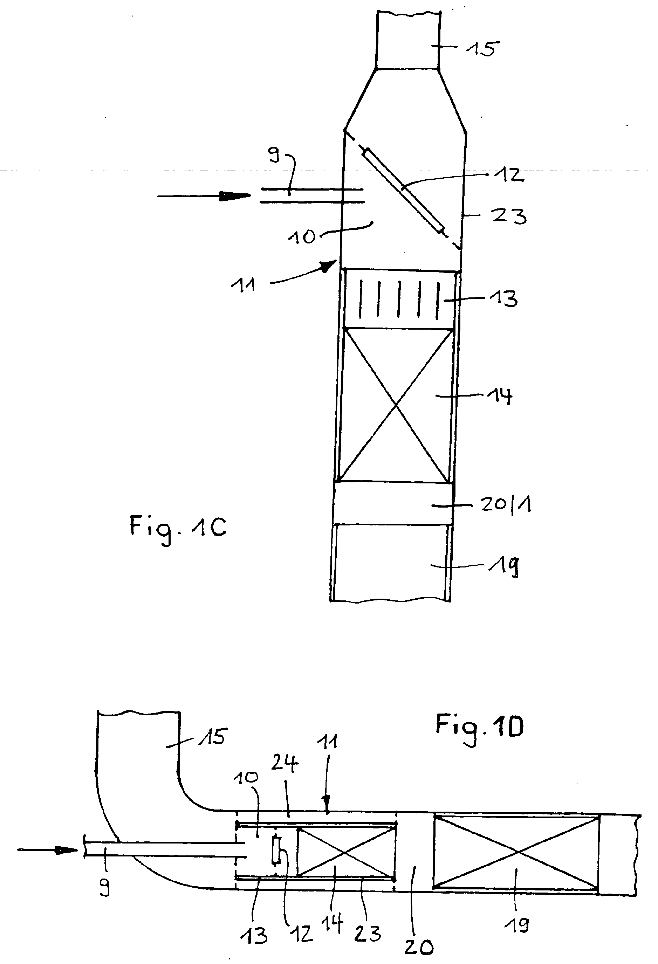

Fig. 1 mit Fig. 1A schematisch die erfindungsgemäße Vorrichtung mit einem außerhalb einer Abgasleitung angeordneten Ammoniak-Reaktor,
Fig. 1 mit Fig. 1B schematisch die erfindungsgemäße Vorrichtung mit einem innerhalb einer Abgas-Bypassleitung angeordneten Ammoniak-Reaktor,
Fig. 1 mit Fig. 1C schematisch die erfindungsgemäße Vorrichtung mit einem innerhalb einer Abgasleitung angeordneten Ammoniak-Reaktor,
Fig. 1 mit Fig. 1D schematisch die erfindungsgemäße Vorrichtung mit einem innerhalb einer Abgasleitung angeordneten Ammoniak-Reaktor,
Fig. 2 je eine Ausführungsform eines Pellets-Vorratsbehälters, einer Pellets-Dosiervorrichtung und eines Pellets-Beschleunigers als Teile der erfindungsgemäßen Vorrichtung, und
Fig. 3 in perspektivischer Ansicht den Pellets-Beschleuniger aus Fig. 2 ohne Gehäuse-deckel.

In der Zeichnung ist mit 1 ein Vorratsbehälter für feste Harnstoff-Pellets bezeichnet. Es handelt bei den Harnstoff-Pellets um ein vorzugsweise kugelförmiges Harnstoffgranulat, bei dem die Harnstoff-Pellets alle gleich groß sind und die Form von Kugeln mit einen Durchmesser von einigen Zehnteln Millimetern bis zu mehreren Millimetern haben. Die Harnstoff-Pellets sind intern des Vorratsbehälters 1 in einem Vorratsraum 2 als Schüttgut bevorratbar und über eine verschließbare Füllöffnung 3 in letzteren einfüllbar. Der Vorratsraum 2 verjüngt sich trichterförmig bei 4 zu einem Auslass 5 hin. Mit 6 ist eine nicht näher dargestellte Einrichtung bezeichnet, die dazu dient, die im Raum 2 eingelagerten Harnstoff-Pellets trocken und rieselfähig zu halten, also deren Verkleben zu verhindern. Am Auslass 5 schließt sich eine Pellets-Dosiervorrichtung 7 und an diese wiederum ein Pellets-Beschleuniger 8 an. An dessen Ausgang schließt sich ein Pellets-Schusskanal 9 an, der in einen Raum oder eine Zone 10 in einem Reaktor zur Ammoniakerzeugung ausmündet. Letzterer ist nachfolgend Ammmoniak-Reaktor 11 genannt. Dieser weist den Raum bzw. die Zone 10 für ein Einschießen von Harnstoff-Pellets und eine am Ende der freien Schussstrecke angeordnete Pellets-Prallwand 12 auf. Desweiteren weist der Ammoniak-Reaktor 11 eine Harnstoff-Verdampfungsvorrichtung 13 und daran anschließend einen Hydrolysekatalysator 14 auf. In den Pellets-Schusskanal 9 ist ― vorzugsweise nahe zu dessen reaktorseitigem Ende/Ausgang hin gerückt ― ein Absperrorgan 9/1, beispielsweise Absperrschieber, eingebaut, das durch Befehle ― siehe Pfeil 9/2 ― einer elektronischen Steuer- und Regelelektronik ECU gesteuert wird und nur dann in Offen- bzw. Durchlassposition geschaltet ist, wenn eine Förderung von Harnstoff-Pellets erfolgen soll, also sowohl die Pellets-Dosiervorrichtung 7 als auch der Pellets-Beschleuniger 8 betrieben werden. Sobald letzterer abgeschaltet ist, wird das Absperrorgan 9/1 in Absperrposition umgeschaltet, so dass dann keine heißen Gase in den abgesperrten Teil des Schusskanals 9 eindringen können. Mit 15 ist in den einzelnen Ausführungsbeispielen bzw. Anwendungsbeispielen eine Abgasleitung bezeichnet, die das Abgas einer Brennkraftmaschine oder Gasturbine oder eines Brenners abführt, welches unter Zuhilfenahme des erfindungsgemäß erzeugten Ammoniaks nachbehandelbar ist.

Fig. 1 zeigt in Verbindung mit Fig. 1A jene Version der erfindungsgemäßen Vorrichtung, bei der der Ammoniak-Reaktor 11 außerhalb der Abgasleitung 15 angeordnet ist. In dieser Version besitzt der Ammoniak-Reaktor 11 ein Außengehäuse 16, in dem innerhalb des Raumes bzw. der Zone 10 die Harnstoff-Verdampfungsvorrichtung 13 z. B. in Form eines zylindrischen Heizrohres und darin im hinteren Bereich die Pellets-Prallwand 12 so angeordnet ist, dass das erzeugte Gasgemisch außen an ihr vorbei zum anschließenden Hydrolysekatalysator 14 hinströmen kann. Dieser erstreckt sich über den ganzen Querschnitt des Außengehäuses 16. Strömungsmäßig nach dem Hydrolysekatalysator 14 ist eine Auslasskammer 17 gegeben, aus der das erzeugte Gasgemisch über eine Speiseleitung 18 einer nachgeordneten Einrichtung zuführbar ist. Im Fall von Fig. 1A führt die Speiseleitung 18 in die Abgasleitung 15 und mündet dort beabstandet vor wenigstens einem in diese oder einen Schalldämpfer eingebauten SCR-Katalysator 19 in eine Mischzone 20 aus, in der das zugeführte Gasgemisch vor seinem Eintritt in den/die SCR-Katalysator(en) 19 mit dem Abgas vermischbar ist. Beim erfindungsgemäßen Verfahren ist außerdem Wasser bzw. Wasserdampf nötig, um die bei der Thermolyse der Harnstoff-Teilchen sich bildende schädliche Isocyansäure entsprechend chemisch nachbehandeln zu können. Dieses Wasser kann entweder unmittelbar eindosiert werden, alternativ und bevorzugt wird jedoch der Restwasserdampfanteil des Abgases als Wasserlieferant herangezogen, wozu im Fall von Fig. 1 + Fig. 1A ein Abgasteilstrom aus der Abgasleitung 15 über eine von dieser abzweigenden Zuleitung 21 in den Raum bzw. die Zone 10 des Ammoniak-Reaktors 11 eingespeist wird, und zwar in bedarfsoptimierter geregelter Menge über ein von der Steuer- und Regelelektronik ECU über die Steuerleitung 22/1 entsprechend eingestelltes Steuerventil 22. Zwischen der Abzweigstelle der Zuleitung 21 und der Ausmündungsstelle der Speiseleitung 18 ist in die Abgasleitung 15 ein Strömungswiderstand angeordnet, bei dem es sich um die Turbine eines Abgasturboladers und/oder einen Voroxidationskatalysator zur NO₂-Erzeugung handeln kann.

Alternativ hierzu zeigt Fig. 1 in Verbindung mit Fig. 1B eine Version der erfindungsgemäßen Vorrichtung, bei der der Ammoniak-Reaktor 11 in eine Abgas-Bypassleitung 15/2 eingebaut ist. Diese zweigt von der Abgasleitung 15 an einer Abzweigstelle 15/3 ab und mündet strömungsmäßig nach dem Ammoniak-Reaktor 11 wieder in die Abgasleitung 15 ein, wobei die Mündungsstelle 15/4 räumlich kurz vor dem SCR-Katalysator 19 und der vor diesem gegebenen Mischzone 20 angeordnet ist. In diesem Fall ist der Ammoniak-Reaktor 11 in einem das Gehäuse für diesen bildenden Abschnitt 15/21 der Abgas-Bypassleitung 15/2 gegeben, in dem der Hydrolysekatalysator 14 den ganzen Leitungsquerschnitt ausfüllend eingebaut und räumlich davor die Harnstoff-Verdampfungsvorrichtung 13 angeordnet sowie die Zone 10 gegeben sind, in die der Pellets-Schusskanal 9 einmündet und in der am freien Ende der Schuss-Strecke auch die Pellets-Prallwand 12 angeordnet ist. Auch hier ist die Harnstoff-Verdampfungsvorrichtung 13 in Form eines zylindrischen Heizrohres oder einer zylindrischen Heizspirale realisiert und in deren hinteren Bereich die Pellets-Prallwand 12 so gehaltert, dass das erzeugte Gasgemisch außen an ihr vorbei zum anschließenden Hydrolysekatalysator 14 hinströmen kann. In diesem Fall dient die Abgasbypassleitung 15/2 ähnlich wie die Speiseleitung 21 von Fig. 1A zur Zuführung eines Abgasteilstromes in den Ammoniak-Reaktor 11, welcher Abgasteilstrom auch hier mit seinem Restwasserdampfanteil als Wasserlieferant herangezogen wird, um die bei der Verdampfung des Harnstoffs neben Ammoniak entstehende schädliche Isocyansäure dann im Hydrolysekatalysator 14 chemisch in Ammoniak und Kohlendioxid umzuwandeln. Die Menge des Abgasteilstromes ist über ein im Bereich des Eingangs 15/3 der Abgas-Bypassleitung 15/2 angeordnetes Absperr/Durchlasssteuerorgan 15/5 einstellbar, das eine Absperrposition, eine Voll-Offen-Position und verschiedene Zwischenstellungen zwischen diesen einnehmen kann und durch ein Stellorgan betätigbar ist, das seine Befehle über Steuerleitung 15/51 von der Regel- und Steuereinheit ECU erhält.

Alternativ hierzu zeigt Fig. 1 in Verbindung mit Fig. 1C und Fig. 1D jeweils eine Version der erfindungsgemäßen Vorrichtung, bei der der Ammoniak-Reaktor 11 innerhalb der Abgasleitung 15 räumlich und strömungsmäßig vor dem/den SCR-Katalysator(en) 19 angeordnet ist. Im Fall von Fig. 1 mit Fig. 1C weist der Ammoniak-Reaktor 11 ein Gehäuse 23 auf, das ein Teil bzw. einen Abschnitt der Abgasleitung 15 bildet. Im Fall von Fig. 1 mit Fig. 1D ist das Gehäuse 23 des Ammoniak-Reaktors 11 durchmesserkleiner als die Abgasleitung 15 und koaxial in dieser angeordnet ist, so dass außen um das Gehäuse 23 ein durchströmbarer Ringraum 24 verbleibt. Im Gehäuse 23 ist der Hydrolysekatalysator 14 und räumlich davor die Harnstoff-Verdampfungseinrichtung 13 untergebracht. In die dortige Zone 10 mündet der Pellets-Schusskanal 9 ein und am Ende der freien Schussstrecke ist die Pellets-Prallwand 12 angeordnet. Im Fall von Fig. 1 mit Fig. 1C erstreckt sich der Hydrolysekatalysator 14 über den ganzen Querschnitt des Gehäuses 23 und die Prallwand 12 räumlich vor der Harnstoff-Verdampfungsvorrichtung 13 schräg stehend im Gehäuse 23, so dass die Trümmerteile der auftretenden Harnstoff-Pellets zur Harnstoff-Verdampfungsvorrichhtung 13 hin umgelenkt werden.

Die Prallwand 12 ist in allen Fällen als massive glatte oder geriffelte oder anderweitig oberflächig für Pellets-Zertrümmerung strukturierte Metallplatte ausgebildet.

Nach dem Ammoniak-Raktor 11 ist in der Abgasleitung 15 und räumlich vor dem/den SCR-Katalysator(en) 19 im Fall von Fig. 1 mit Fig. 1C eine Übertritts-/Beruhigungszone 20/1 und im Fall von Fig. 1 mit Fig. 1D auch eine Mischzone 20 gegeben, in der das aus dem Hydrolysekatalysator 14 austretende Gasgemisch vor seinem Eintritt in den/die SCR-Katalysator(en) mit dem über den Ringraum 24 eingespeisten Abgas vermischbar ist. Im Fall von Fig. 1 mit Fig. 1C wird der Hydrolysekatalysator 14 vollständig vom in der Abgasleitung 15 ankommenden Abgas durchströmt und so dessen Restwasserdampfanteil vollständig genutzt. Im Fall von Fig. 1 mit Fig. 1D dagegen wird der Hydrolysekatalysator 14 nur von einem Abgasteilstrom durchströmt und dessen Restwasserdampfanteil genutzt, um die bei der Harnstoffverdampfung entstehende Isocyansäure in Ammoniak und Kohlendioxid umzuwandeln.

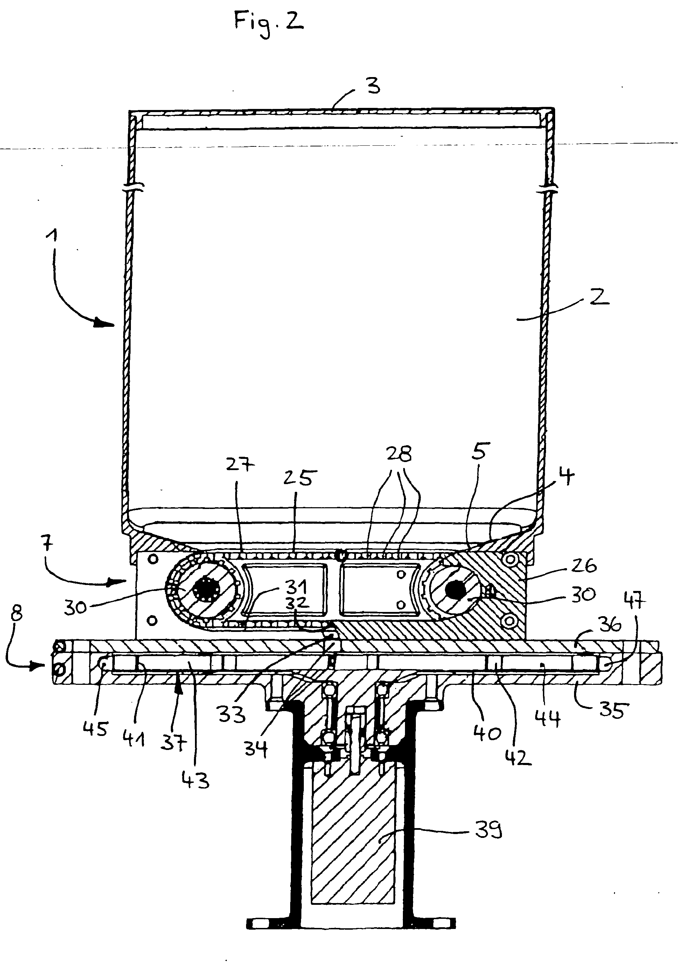

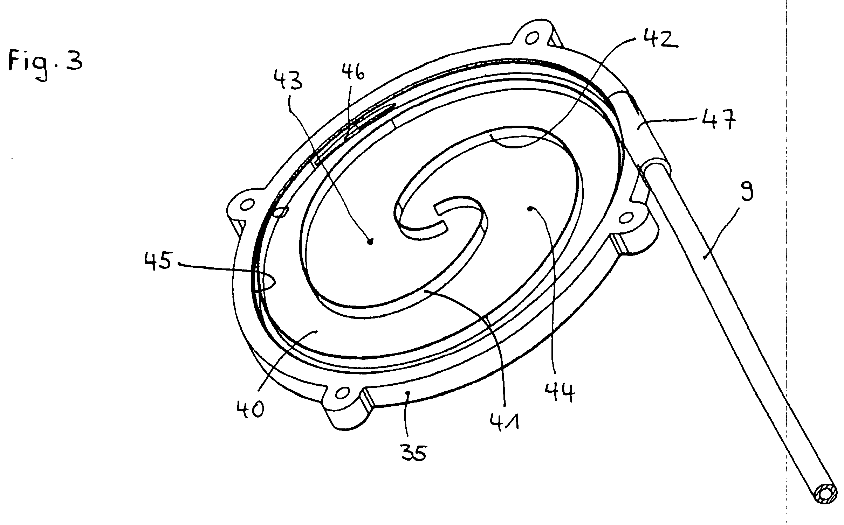

Nachstehend ist auf verschiedene Ausführungsmöglichkeiten der Einzelkomponenten der erfindungsgemäßen Vorrichtung anhand von Fig. 2 und 3 näher eingegangen.

Der Vorratsbehälter ist so ausgestaltet und angeordnet, dass die in seinem Raum 2 bevorrateten Harnstoff-Pellets durch Schwerkraft aus ihm ausleitbar sind. Hierzu ist der an tiefster Stelle des Vorratsbehälters 1 angeordnete Auslass 5 entweder durch ein durchmessermäßig auf den geführten Einzelauslass jedes Harnstoff-Pellets abgestelltes Auslassrohr oder einen auf den gleichzeitigen Auslass mehrerer Harnstoff-Pellets abgestellten Auslassschacht gebildet. Die zuletzt genannte Ausführungsform ist aus Fig. 2 ersichtlich. Der diesbezügliche Auslassschacht hat eine auf den Durchmesser der Harnstoff-Pellets abgestellte Breite und eine auf die Anzahl x Durchmesser gleichzeitig abzugebender Harnstoff-Pellets abgestellte Länge.

Die Pellets-Dosierungsvorrichtung 7 schließt sich mit ihrem Pellets-Einlass 25 unten direkt am Pellets-Auslass 5 des Pellets-Vorratsbehälters 1 formmäßig angepasst an. Im dargestellten Beispiel weist die Pellets-Dosierungsvorrichtung 7 in einem mit dem Vorratsbehälter 1 verbundenen Gehäuse 26 ein am Pellets-Einlass 25 vorbeilaufendes endloses Förderband 27 mit auf einander folgenden Vertiefungen 28 für die Aufnahme jeweils eines Harnstoff-Pellets auf. Dieses Förderband 27 ist mittels eines (nicht dargestellten) elektronisch von der Regel- und Steuereinheit ECU über die Steuerleitung 29/1 drehzahlgeregelten Elektromotors 29 über Antriebsräder 30 antreibbar. Mit diesem Förderband 27 sind die über den Einlass 25 eingespeisten Harnstoff-Pellets entlang einer Führungskulisse 31 zu einem an deren Ende gegebenen Umlenkorgan 32 transportierbar und dann mittels letzterem in einen Auslasskanal 33 einspeisbar sowie über diesen einzeln aus der Dosiervorrichtung 7 ausleitbar.

Im dargestellten Beispiel schließt sich an den Auslasskanal 33 der Pellets-Dosiervorrichtung 7 der Pellets-Beschleuniger 8 mit seinem auf einen Einzeleinlass der zugeführten Harnstoff-Pellets ausgelegten Einlasskanal 34 an. Der dargestellte Pellets-Beschleuniger 8 weist ein Gehäuse 35 mit einem Deckel 36, in dem der Einlasskanal 34 ausgebildet ist, und intern eine elektromechanische Pellets-Beschleunigungsvorrichtung 37 auf, mittels der jedes eingespeiste Harnstoff-Pellets auf eine Geschwindigkeit in der Größenordnung von bis zu 100 m/s beschleunigbar und dann über einen Auslass 38 aus dem Gehäuse 35,36 heraus in den ausschließenden Schusskanal 9 sowie über diesen weiter geführt in den Ammoniak-Reaktor 11 einschießbar ist.

Die Beschleunigungsvorrichtung 37 des Pellets-Beschleunigers 8 besteht im dargestellten Beispiel aus einer zentral im Gehäuse 35,36 gelagerten runden Scheibe 40, die von einem elektronisch drehzahlregelbaren Elektromotor 39 antreibbar ist und oberseitig mindestens einen durch spiralförmig vom Zentrum zum äußeren Rand führende Wände 41,42 begrenzten Beschleunigungskanal 43,44 aufweist. Über dessen bzw. deren zentrumsnahen Innenbereich mündet der im Gehäuse-Deckel 36 ausgebildete Einlasskanal 34 aus. Die die Beschleunigungskanäle 43,44 begrenzenden Wände weisen ein spiralförmigen Verlauf auf, der aus mehreren unterschiedlichen Kreisbögen und/oder einer logarithmischen Kurve und/oder einer Kurve mit durchgehend positiver Steigung dargestellt ist. Im Gehäuse 35,36 des Pellets-Beschleunigers 7 ist um die rotierende Scheibe 40 in Höhe der oberseitigen Beschleunigungskanäle 43,44 ein partiell umlaufender nutförmiger Auslasskanal 45 gegeben, an dessen Ende 46 sich ein tangential abgehender rohrförmiger Auslasskanal 47, und daran der Schusskanal 9 anschließt. Mit jedem spiralförmigen Beschleunigungskanal 43,44 wird ein eingespeistes Harnstoff-Pellets durch die Rotation der Scheibe 40 bei seiner Bewegung vom Zentrum zum Rand von Null auf ein Maximum beschleunigt und mit der dann gegebenen hohen Geschwindigkeit über die Auslasskanäle 45,47 in den Schusskanal 9 sowie über diesen in dem Ammoniak-Reaktor 11 eingeschossen. Aufgrund der ihnen solchermaßen aufgeprägten kinetischen Energie werden die einzelnen Harnstoff-Pellets bei ihrem Auftreffen auf der Pellets-Prallwand 12 in eine Vielzahl von Einzelteilen bzw. Bruchstücken zertrümmert. Um diese Zerkleinerung bzw. Zertrümmerung in möglichst viele sehr kleine Einzelteile zu begünstigen, die Pellets-Prallwand 12 an ihrer Oberfläche entsprechend strukturiert oder gestaltet.

Die Drehzahlen des Förderbandes 27 der Pellets-Dosiervorrichtung 7 und der rotierenden Scheibe 40 des Pellets-Beschleunigers 8 sind exakt aufeinander im Sinne einer bedarfsoptimierten Menge von in den Ammoniak-Reaktor 11 einzuschießenden Menge/Anzahl an Harnstoff-Pellets abgestimmt, wobei sich der diesbezügliche Bedarf an der Abnahmemenge und -geschwindigkeit des erzeugten, Ammoniak enthaltenden Gases orientiert. Dieser Bedarf ist die Regelgröße, die in die rechnergestützt arbeitende Regel- und Steuereinheit ECU eingespeist wird, die dann diese Sollgröße in eine entsprechende Drehzahlregelung der das Förderband 27 und die Scheibe 40 antreibenden Elektromotoren 29,39 umsetzt. Der die Scheibe 40 antreibende Elektromotor 39 wird dabei vorzugsweise auf einer konstant hohen Drehzahl von beispielsweise 15000-20000 U/min eingeregelt und betrieben.

Das erfindungsgemäße Verfahren zur Erzeugung von Ammoniak aus festen Harnstoff-Pellets läuft mit der erfindungsgemäßen Vorrichtung wie folgt ab.

Die Harnstoff-Pellets werden aus dem Vorratsbehälter 1 mittels der Dosiervorrichtung 7 in geregelter Menge/Anzahl entnommen und zum Pellets-Beschleuniger 8 transportiert. Mit diesem wird jedes zugeführte Harnstoff-Pellets intern mechanisch auf eine hohe Geschwindigkeit beschleunigt, dann mit dieser Geschwindigkeit in einen auslassseitig anschließenden Schusskanal 9 und über diesen weiter geführt in den Ammoniak-Reaktor 11 eingeschossen, wo es am Ende der Schussstrecke an der dortigen Pellets-Prallwand 12 in eine Vielzahl von Bruchstücken zerkleinert wird. Diese Pellets-Bruchstücke werden unmittelbar anschließend mittels der Harnstoff-Verdampfungsvorrichtung 13 bei Temperaturen bis ca. 550°C in ein Ammoniak (NH₃) und Isocyansäure (HNCO) enthaltendes Gasgemisch umgewandelt. Dieses wird anschließend zusammen mit Wasserdampf, resultierend z. B. aus dem Restwasserdampfanteil im Abgas einer Brennkraftmaschine, Gasturbine oder eines Brenners, durch einen Hydrolysekatalysator 14 geleitet, wobei die Isocyansäure in Ammoniak und Kohlendioxid umgewandelt wird.

Am Ende dieses erfindungsgemäßen Verfahrens ist somit ausgangs des Hydrolysekatalysators 4 ein Ammoniak enthaltendes Gasgemisch gegeben, das anschließend seiner weiteren bestimmungsgemäßen Verwendung entsprechend einer dem Ammoniak-Reaktor 11 nachgeordneten Apparatur, Gerätschaft oder Einrichtung, z. B. SCR-Katalysator(en) 19 ― wie dargestellt ―, zuführbar ist.

## Patentansprüche

1. Vorrichtung zur Erzeugung von Ammoniak aus festen Harnstoff-Pellets, die in einem Vorratsbehälter (1) bevorratet sind, **gekennzeichnet durch** folgende nacheinander angeordnete Teilvorrichtungen, nämlich
a) eine Pellets-Dosiervorrichtung (7),
b) einen Pellets-Beschleuniger (8),
c) einen Pellets-Schusskanal (9),
d) einen Ammoniak-Reaktor (11) mit
d1) einem Raum oder einer Zone (10) für ein Einschießen von Harnstoff-Pellets und
d2) einer am Ende der freien Schussstrecke angeordneten Pellets-Prallwand (12) und
d3) einer Harnstoff-Verdampfungsvorrichtung (13) und
d4) einem Hydrolysekatalysator (14),
wobei die Harnstoff-Pellets mittels der Pellets-Dosiervorrichtung (7) aus dem Vorratsbehälter (1) in geregelter Menge/Anzahl entnehmbar und zum Pellets-Beschleuniger (8) transportierbar, mit diesem intern mechanisch auf eine hohe Geschwindigkeit beschleunigbar, dann aus diesem über den Pellets-Schusskanal (9) in den Ammoniak-Reaktor (11) einschießbar und darin am Ende der Schussstrecke an der dortigen Pellets-Prallwand (12) in eine Vielzahl von Bruchstücken zerkleinerbar sind, welche Pellets-Bruchstücke unmittelbar ausschließend mittels der Harnstoff-Verdampfungsvorrichtung (12) in ein Ammoniak (NH₃) und lsocyansäure (HNCO) enthaltendes Gasgemisch umwandelbar sind, das anschließend zusammen mit Wasserdampf **durch** den Hydrolysekatalysator (14) leitbar und dabei die Isocyansäure in Ammoniak und Kohlendioxid umwandelbar ist.

2. Vorrichtung nach Anspruch 1, **dadurch gekennzeichnet, dass** der Ammoniak-Reaktor (11) innerhalb oder außerhalb einer Abgasleitung (15) einer Brennkraftmaschine oder Gasturbine oder eines Brenners abgeordnet ist.

3. Vorrichtung nach Anspruch 2, **dadurch gekennzeichnet, dass** der Ammoniak-Reaktor (11), wenn außerhalb der Abgasleitung (15) angeordnet, über eine zwischen Abgasleitung (15) und Ammoniak-Reaktor (11) verlaufende sowie in dessen Raum bzw. Zone (10) einmündende, mit einem Steuerventil (22) ausgestattete Speiseleitung (21) mit einem von der Abgasleitung (15) in geregelter Menge abgezweigten Abgasteilstrom versorgbar ist, dessen Restwasserdampfanteil im Ammoniak-Reaktor (11) beim Durchströmen des Hydrolysekatalysators (14) mit dazu dient, die bei der Thermolyse der Harnstoffteilchen entstehende Isocyansäure (HNCO) in Ammoniak (NH₃) und Kohlendioxid (CO₂) umzuwandeln, wobei das Steuerventil (22) durch Befehle einer elektronischen Regel- und Steuereinheit (ECU) entsprechend einstellbar ist.

4. Vorrichtung nach Anspruch 2, **dadurch gekennzeichnet, dass** der Ammoniak-Reaktor (11), wenn außerhalb der Abgasleitung (15) angeordnet, innerhalb einer Abgas-Bypassleitung (15/2) angeordnet ist, über die er in geregelter Menge mit einem Abgasteilstrom versorgbar ist, dessen Restwasserdampfanteil im Ammoniak-Reaktor (11) beim Durchströmen des Hydrolysekatalysators (14) mit dazu dient, die bei der Thermolyse der Harnstoffteilchen entstehende Isocyansäure (HNCO) in Ammoniak (NH₃) und Kohlendioxid (CO₂) umzuwandeln, wobei zur Einstellung der Menge des abgezweigten Abgasteilstroms ein vorzugsweise am Eingang (15/3) der Abgas-Bypassleitung (15/2) angeordnetes, von einer elektronischen Regel- und Steuereinrichtung (ECU) her einstellbares Absperr- und Durchlassorgan (15/5) vorgesehen ist.

5. Vorrichtung nach Anspruch 2, **dadurch gekennzeichnet, dass** der Ammoniak-Reaktor (11), wenn innerhalb der Abgasleitung (15) angeordnet, in einem zumindest annähernd koaxialen Gehäuse (23) zumindest den Hydrolysekatalysator (14), vorzugsweise strömungsmäßig davor auch die Harnstoff-Verdampfungsvorrichtung (13) aufweist, welches Gehäuse (23) in der Abgasleitung (15) von einem Abgasteilstrom außen passierbar und von einem restlichen Abgasteilstrom innen durchströmbar ist , dessen Restwasserdampfanteil mit dazu dient, die bei der Thermolyse der Harnstoffteilchen entstehende Isocyansäure (HNCO) in Ammoniak (NH₃) und Kohlendioxid (CO₂) umzuwandeln.

6. Vorrichtung nach Anspruch 2, **dadurch gekennzeichnet, dass** der Ammoniak-Reaktor (11), wenn innerhalb der Abgasleitung (15) angeordnet, in einem durch ein Teilstück bzw. einen Abschnitt derselben gebildeten Gehäuse (23) angeordnet ist, wobei der Hydrolysekatalysator (14) sich über den gesamten Querschnitt dieses Gehäuses (23) erstreckt und somit vom gesamten Abgasstrom durchströmbar ist, dessen Restwasserdampfanteil daher vollständig dazu heranziehbar ist, die bei der Thermolyse der Harnstoffteilchen entstehende Isocyansäure (HNCO) in Ammoniak (NH₃) und Kohlendioxid (CO₂) umzuwandeln.

7. Vorrichtung nach Anspruch 1, **dadurch gekennzeichnet, dass** die Harnstoff-Pellets aus dem Vorratsbehälter (1) durch Schwerkraft ausleitbar sind und hierzu der Auslass (5) des Vorratsbehälters (1) an seiner tiefsten Stelle entweder durch ein durchmessermäßig auf den geführten Einzelauslass eines Harnstoff-Pellets abgestelltes Auslassrohr oder einen auf den gleichzeitigen Auslass mehrerer Harnstoff-Pellets abgestellten Auslassschacht mit einer auf den Durchmesser der Harnstoff-Pellets abgestellten Breite und auf die die Anzahl x Durchmesser gleichzeitig abzugebender Harnstoff-Pellets abgestellten Länge aufweist.

8. Vorrichtung nach einem der Ansprüche 1 und 7, **dadurch gekennzeichnet, dass** sich die Pellets-Dosierungsvorrichtung (7) mit ihrem Pellets-Einlass (25) unten am Pellets-Auslass (5) des Vorratsbehälters (1) formmäßig angepasst anschließt.

9. Vorrichtung nach einem der Ansprüche 1 und 8, **dadurch gekennzeichnet, dass** die Pellets-Dosiervorrichtung (7) in einem Gehäuse (26) ein am Pellets-Einlass (25) vorbeilaufendes endloses Förderband (27) aufweist, das über einen von einer Regel- und Steuereinheit (ECU) her elektronisch drehzahlgeregelten Elektromotor (29) antreibbar ist und mittels welchem die über den Pellets-Einlass (25) eingespeisten Harnstoff-Pellets entlang einer Führungskulisse (31) zu einem an deren Ende gegebenen Umlenkorgan (32) transportierbar und mittels diesem einzeln nacheinander in einen Auslasskanal (33) einspeisbar sowie über letzteren einzeln aus der Dosiervorrichtung (7) ausleitbar sind.

10. Vorrichtung nach einem der Ansprüche 1 und 9, **dadurch gekennzeichnet, dass** sich an den Auslasskanal (33) der Pellets-Dosiervorrichtung (7) der Pellets-Beschleuniger (8) mit seinem auf einen Einzeleinlass der zugeführten Harnstoff-Pellets ausgelegten Einlasskanal (34) anschließt.

11. Vorrichtung nach einem der Ansprüche 1 und 10, **dadurch gekennzeichnet, dass** der Pellets-Beschleuniger (8) ein Gehäuse (35,36) mit einem Einlasskanal (34) für Einzeleinlass der dosierten Harnstoff-Pellets und intern eine elektromechanische Pellets-Beschleunigungsvorrichtung (37) aufweist, mittels welcher jedes eingespeiste Harnstoff-Pellet auf eine Geschwindigkeit in der Größenordnung von bis zu 100 m/s beschleunigbar ist, mit der es dann über einen Auslass (46,47) aus dem Gehäuse (35,36) des Pellets-Beschleunigers (8) heraus- und in den ausschließenden Schusskanal (9) sowie über diesen weitergeführt in den Ammoniak-Reaktor (11) einschiessbar ist.

12. Vorrichtung nach Anspruch 11, **dadurch gekennzeichnet, dass** die Pellets-Beschleunigungsvorrichtung (8) aus einer zentral im Gehäuse (35,36) gelagerten runden Scheibe (40) besteht, die von einem von einer Regel- und Steuereinheit (ECU) her elektronisch drehzahlregelten Elektromotor (39) antreibbar ist und oberseitig mindestens einen durch spiralförmig vom Zentrum zum äußeren Rand führende Wände (41,42) begrenzten Beschleunigungskanal (43,44) aufweist, über dessen zentrumsnahem Innenbereich der Einlasskanal (34) ausmündet.

13. Vorrichtung nach Anspruch 12, **dadurch gekennzeichnet, dass** die einen spiralförmigen Beschleunigungskanal (43,44) begrenzenden Wände (41,42) einem Verlauf aus mehreren Kreisbögen und/oder einer logarithmischen Kurve und/oder einer Kurve mit durchgehend positiver Steigung hat.

14. Vorrichtung nach Anspruch 13, **dadurch gekennzeichnet, dass** im Gehäuse (35,36) des Pellets-Beschleunigers (8) um die rotierende Scheibe (40) in Höhe von deren oberseitigen Beschleunigungskanälen (43,44) ein partiell umlaufender nutartiger Auslasskanal (45) gegeben ist, von dem ein rohrartiger Auslasskanal (47) tangential abzweigt, an den sich der Schusskanal (9) anschließt.

15. Vorrichtung nach einem der vorhergehenden Ansprüche, **dadurch gekennzeichnet, dass** die Pellets-Prallwand (12), an der die eingeschossenen Pellets mit hoher Geschwindigkeit auftreffen, an ihrer Oberfläche dahingehend strukturiert oder gestaltet ist, dass die Zertrümmerung der auftreffenden Harnstoff-Pellets in möglichst viele und sehr kleine Einzelteile begünstigt wird.

16. Vorrichtung nach einem der vorhergehenden Ansprüche, **dadurch gekennzeichnet, dass** die Drehzahlregelung des Förderbandes (27) in der Pellets-Dosiervorrichtung (7) und der rotierenden Scheibe (40) des Pellets-Beschleunigers (8) exakt aufeinander im Sinne einer bedarfsoptimierten Menge/Anzahl von in den Ammoniak-Reaktor (11) einzuschießenden Harnstoff-Pellets abgestimmt sind, wobei beide Drehzahlen von der elektronischen, rechnergestützt arbeitenden Steuer- und Regeleinrichtung (ECU) vorgegeben werden und dabei vorzugsweise nur die Drehzahl des Motors (29) der Pellets-Dosiereinrichtung (7) variiert, die Drehzahl des Motors (39) des Pellets-Beschleunigers (8) dagegen konstant hoch auf z. B. 16000 U/min gehalten wird.

17. Verfahren zur Erzeugung von Ammoniak aus festen Harnstoff-Pellets, die in einem Vorratsbehälter (1) bevorratet werden, **gekennzeichnet durch** folgende Verfahrensschritte, nämlich, die Harnstoff-Pellets werden mittels einer Pellets-Dosiervorrichtung (7) aus dem Vorratsbehälter (1) in geregelter Anzahl/Menge entnommen und zu einem Pellets-Beschleuniger (8) transportiert, mit diesem intern mechanisch auf eine hohe Geschwindigkeit beschleunigt, dann aus diesem in einen Pellets-Schusskanal (9) und über diesen weiter geführt in einen Ammoniak-Reaktor (11) eingeschossen und darin am Ende der Schussstrecke an einer dortigen Pellets-Prallwand (12) in eine Vielzahl von Bruchstücken zerkleinert, welche Pellets-Bruchstücke unmittelbar ausschließend mittels einer Harnstoff-Verdampfungsvorrichtung (13) in ein Ammoniak (NH₃) und Isocyansäure (HNCO) enthaltendes Gasgemisch umwandelbar sind, das anschließend zusammen mit Wasserdampf **durch** einen Hydrolysekatalysator (14) geleitet und dabei die Isocyansäure in Ammoniak und Kohlendioxid umgewandelt wird.

18. Verfahren nach Anspruch 17, **dadurch gekennzeichnet, dass** das am Ende des Verfahrens ausgangs des Hydrolysekatalysators (14) gegebene, Ammoniak enthaltende Gasgemisch anschließend seiner weiteren bestimmungsgemäßen Verwendung entsprechend einer dem Ammoniak-Reaktor (11) nachgeordneten Apparatur, Gerätschaft oder Einrichtung wie SCR-Katalysator(en) (19) zugeführt wird.
